(19) Europäisches Patentamt
European Patent Office
Office européen des brevets

(11) Veröffentlichungsnummer: **0 096 140**
**A1**

(12) # EUROPÄISCHE PATENTANMELDUNG

(21) Anmeldenummer: 82730080.7

(22) Anmeldetag: 15.06.82

(51) Int. Cl.³: **C 10 B 53/00**
**C 10 B 1/04**

(43) Veröffentlichungstag der Anmeldung:
21.12.83 Patentblatt 83/51

(84) Benannte Vertragsstaaten:
AT BE CH FR GB IT LI LU NL SE

(71) Anmelder: Michel-Kim, Herwig
Bamberger Strasse 41
D-1000 Berlin 30(DE)

(72) Erfinder: Michel-Kim, Herwig
Bamberger Strasse 41
D-1000 Berlin 30(DE)

(74) Vertreter: Meinig, Karl-Heinz
Kurfürstendam 170
D-1000 Berlin 15(DE)

(54) **Verfahren und Vorrichtung zur Speicherung sowie Gewinnung von Bioenergie.**

(57) Es werden Verfahren und zugehörige Vorrichtungen zur Durchführung der Verfahren für die Speicherung sowie Gewinnung von Bioenergie durch Weiterverarbeitung anfallender organischer Rohstoffe beschrieben, wobei diese aus einem Silo 100 in einen Schwel- bzw. Pyrolysereaktor 200 eingebracht werden und das Reaktorgas einer fraktionierten Druckkondensation unterworfen wird. Der Pyrolysereaktor wird von unten über einen Zuführungsschacht gespeist. Als Kondensator finden eine aus einer Mehrzahl von gleichartigen Einheiten bestehende fraktionierte Druckkondensationsvorrichtung 300 mit Radialverdichter Anwendung. Das anfallende Kondensat kann über einen Zentrifugalverdampfer 400 bzw. durch einen Gasdruckturbolader geführt werden.

Figur 1

EP 0 096 140 A1

- i -

Die Erfindung bezieht sich auf ein Verfahren und auf eine Vorrichtung zur Speicherung sowie Gewinnung von Bioenergie durch kontinuierliche und/oder diskontinuierliche Weiterverarbeitung organischer Rohstoffe, beispielsweise pflanzlicher Abfälle aller Art mittels Pyrolyse und Kondensation des durch Vergasung anfallenden Fraktionsgemisches.

Die Gewinnung von Energie aus biologischen Rohstoffen, insbesondere organischen Abfällen aller Art, wie sie in der Landwirtschaft in großen Mengen anfallen, aber auch aus Produkten der Forstwirtschaft, also beispielsweise nicht für andere Energiezweige nutzbaren Holzabfällen, etwa Ästen, Laub, Baumrinde und so weiter, gewinnt im Zeichen der drohenden Energieverknappung von bisher üblichen fossilen Energiequellen aber auch noch zu erschließenden und mit erheblichen Anfangsschwierigkeiten belasteten Nutzungen der Kernenergie immer größere Bedeutung.

Jährlich werden große Mengen anfallender Bioenergie, beispielsweise Stroh, Strauchwerk, die nicht edlen Teile von Gemüsepflanzen und dergleichen mehr, ungenutzt vernichtet.

- 2 -

Es ist aus der Vergangenheit unter anderem bekannt, gehäckseltes Holz in entsprechenden Reaktoren zu vergasen und das Generatorgas zum Betreiben von Motoren zu benutzen, und es ist auch ganz allgemein bekannt, bioenergetische Materialien in Silos von oft erheblicher Dimensionierung zu speichern, um sie dann irgendeiner Weiterverarbeitung zuführen zu können.

Sowohl die Speicherung als auch die Weiterverarbeitung, etwa in Schwel- und Pyrolysereaktoren, als schließlich auch die Kondensation der gewonnenen Gase ist bei den bisher bekannten Verfahren teilweise mit so vielen Schwierigkeiten verbunden oder so wenig praktikabel, daß die Nutzung der Bioenergie in diesem Sinne sich bisher noch kaum einer meßbaren Popularität erfreuen kann.

Hier setzt die vorliegende Erfindung ein, der die Aufgabe zugrunde liegt, sowohl die Silolagerung oder Speicherung bioenergetisch nutzbar zu machender organischer Rohstoffe als auch ihre Weiterverarbeitung und schließlich Kondensatgewinnung derart zu verbessern, daß es möglich wird, die entsprechenden Verfahrensweisen mit wirtschaftlich vertretbaren und in ihrem Aufbau besonders vorteilhaften Vorrichtungen ausführen zu können und hierbei die entstehenden Endprodukte gleichzeitig so

- 3 -

attraktiv zu gestalten, daß sie als begehrte Rohstoffe zur gezielten energetischen Weiterverarbeitung vorliegen.

Die Lösung dieser Aufgabe wird für die Verfahrensweise durch die im Kennzeichen des Anspruchs 1 angegebenen Merkmale erfindungsgemäß gelöst.

Zur Durchführung des Verfahrens dient die im Kennzeichen des Anspruchs 1 definierte erfindungsgemäße Vorrichtung.

Vorteilhafte Weiterbildungen und Ausgestaltungen der vorliegenden Aufgabenlösung ergeben sich aus den Unteransprüchen.

Dadurch, daß das Silo praktisch durch einen an seinem oberen Ende aufgehängten Sack realisiert wird, bedingt das Eigengewicht der in diesen eingefüllten Biomasse automatisch die Möglichkeit der luftdichten kontinuierlichen oder diskontinuierlichen Zuführung weiterer Biomasse bei optimaler Dichtbildung auch für Biomaterialien mit geringem Raumgewicht, wie Stroh oder dergleichen, und bei optimaler Abführungsmöglichkeit aus dem unteren Bereich des Silosackes sowohl im kontinuierlichen als auch im diskontinuierlichen Betrieb. Der dem Silosack nachgeschaltete Schwel- und Pyrolysereaktor ermöglich

- 4 -

bei Verarbeitung auch naßer Rohmasse eine besonders vorteilhafte Vergasung und kontinuierliche Ascheabführung ohne oder mit nur unstörend anfallenden Schlackeanteilen und die fraktionierte Destillation der im Reaktor gewonnenen Gase führt zu einer äußerst vorteilhaften Aufteilung beliebig fein vorgebbarer Fraktionen, ohne daß hierfür ein erheblicher technischer Aufwand für die erforderliche Vorrichtung notwendig ist.

Die beiliegenden Zeichnungen sollen die vorliegende Erfindung anhand eines vorteilhaften Ausführungsbeispiels einer Vorrichtung, die der Durchführung der Verfahrensweise dient, näher erläutern, wobei die Vorrichtung zur Speicherung und Gewinnung der Bioenergie durch Weiterverarbeitung organischer Rohstoffe aller Art aus sowohl einzeln verwendbaren als auch in der vorliegenden oder einer anderen Form hintereinander schaltbaren Einrichtungen besteht, wie hier dem Silosack, dem Schwel- und Pyrolysereaktor, einer Batterie von Druckkondensatoren und einem Zentrifugalverdampfer sowie einer Gas-Luft-Mischeinrichtung.

Es zeigen:

- 5 -

Fig. 1    ein schematisches Übersichtsbild der Vorrichtung nach der Erfindung;

Fig. 2    eine stark vereinfachte Seiten- und Längsdarstellung des Sacksilos;

Fig. 3    eine vorteilhafte Ausführungsform eines Schwel- und Pyrolysereaktors schematisch im Schnitt;

Fig. 4    eine aus drei Batterieeinheiten bestehende Kondensationseinrichtung zur fraktionierten Kondensation des Gases;

Fig. 5    ein Ausführungsbeispiel eines Zentrifugalverdampfers im Schnitt vereinfacht dargestellt; und

Fig. 6    die schematische Wiedergabe einer Gas-Luft-Mischeinrichtung, die in Verbindung mit der Vorrichtung nach Fig. 1 wahlweise einsetzbar ist.

- 6 -

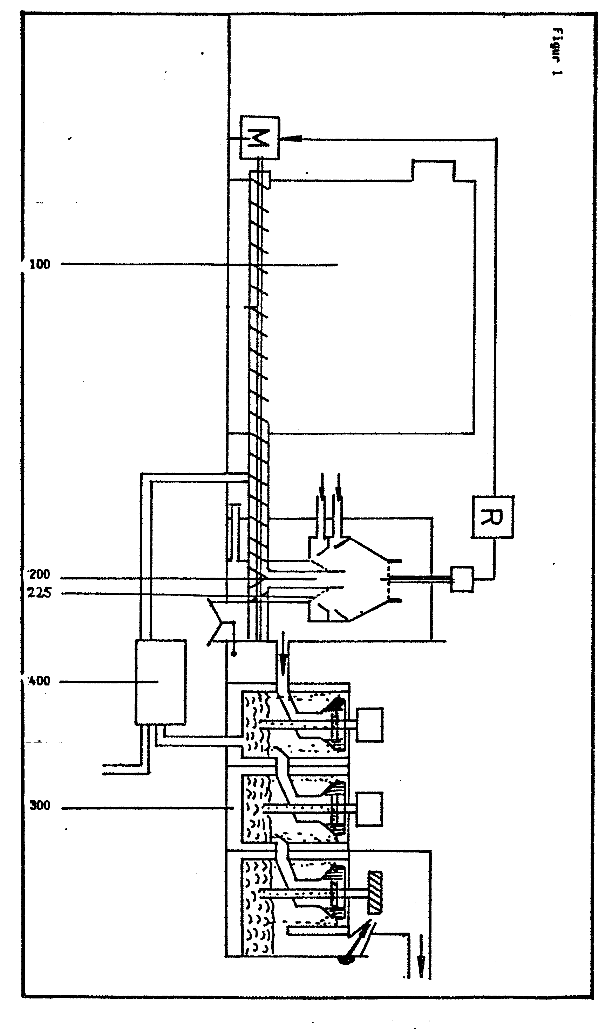

Die in Fig. 1 dargestellte Vorrichtung besteht aus einem Behälter oder Gebäudeteil, in dem ein Silosack 100 aufgehängt ist, aus dem diesem Silosack nachgeschalteten Schwel- und Pyrolysereaktor 200, dem das Biomaterial aus dem unteren Bereich des Silosackes 100 über eine Förderschnecke mittig zugeführt wird und hierbei über ein zentrales Rohr von unten kommend in den Reaktor gedrückt wird, und aus einer Reihe von Druckkondensatoren 300, mittels derer eine fraktionierte Kondensation der im Reaktor 200 anfallenden Gase möglich ist, sowie schließlich aus dem Zentrifugalverdampfer 400.

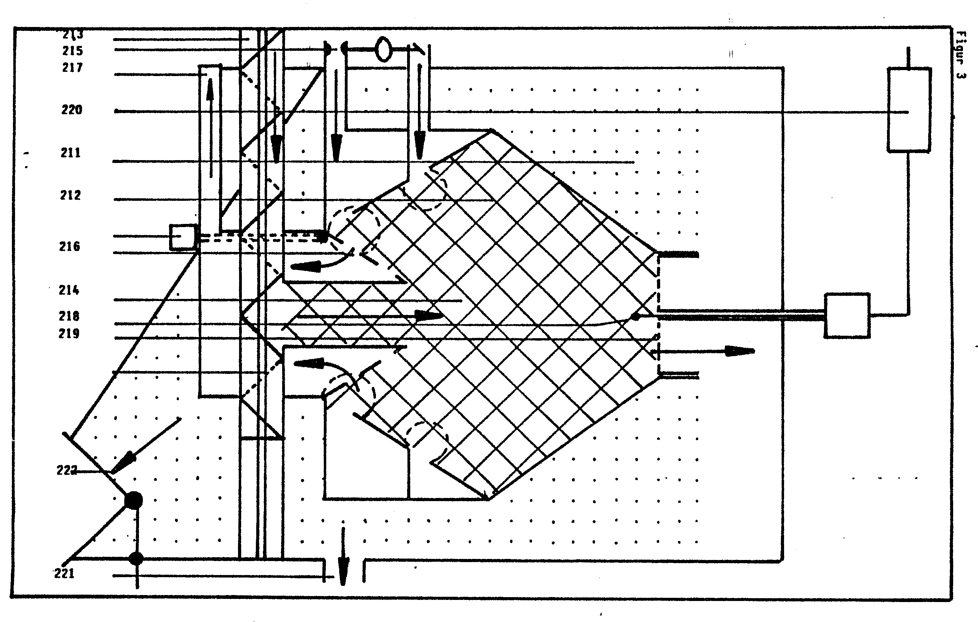

Die einzelnen Einrichtungen der Vorrichtung nach Fig. 1 zur Durchführung des vorliegenden Verfahrens werden in den Fig. 3 bis 6 nachfolgend näher beschrieben.

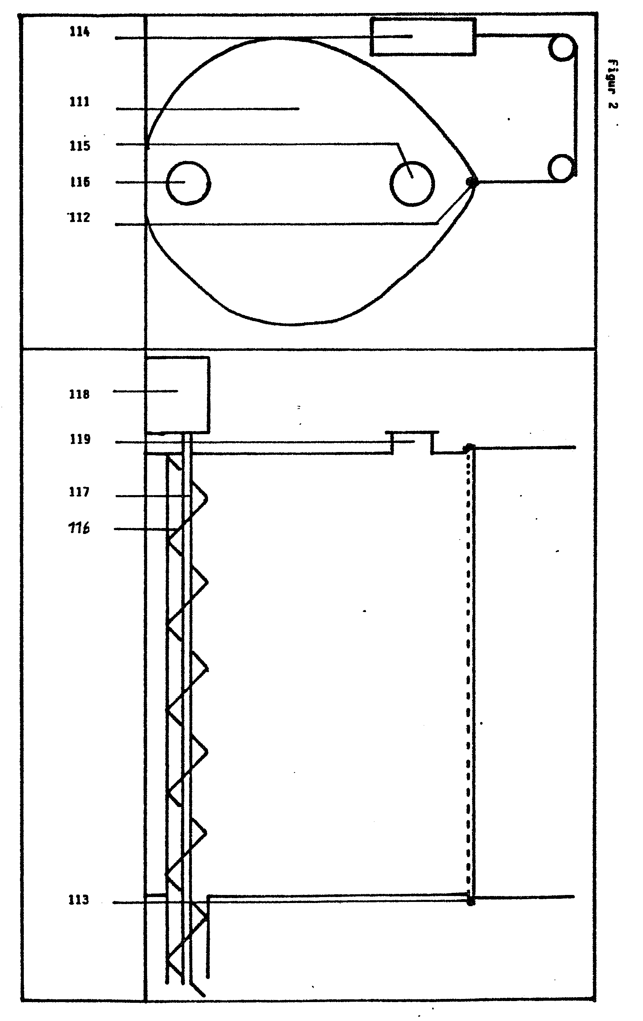

In Fig. 2 ist in der linken Hälfte der Silosack 100 schematisch in seiner Seitenansicht und in der rechten Hälfte in Längssicht dargestellt, und zwar im Schnitt etwa entlang der senkrechten Mittellinie. Wie ersichtlich, erfolgt die Sackaufhängung 112 über eine Stange oder dergleichen, die mit ihren Endabschnitten in Lagerungen 113 gehalten wird, welche beispielsweise durch Schienen oder dergleichen realisierbar sind, so daß die Sackaufhängung 112 in vertikaler Richtung über mehrere nicht

- 7 -

näher bezeichnete Rollen oder andere Umlenklager mittels eines Gegengewichtes 114 verschiebbar gehalten ist und somit die Höhe der Sackaufhängung 112 und damit die Ausbuchtung oder Formgebung des Silosackes selbst je nach Füllhöhe veränderlich einstellbar ist.

Der Silosack 100 selbst stellt somit praktisch einen entlang seiner Stirnflächen geschlossenen Schlauch dar, der im aufgepumpten Zustand eine zylindrische Form einnehmen könnte und der im leeren Zustand schlaff herunterhängt, während er im gefüllten beziehungsweise teilgefüllten Zustand im Querschnitt annähernd Tropfenform einnimmt.

Das Material des so beschaffenen luftdichten Silosackes 100 muß einerseits so gewählt werden, daß der Silosack auch für Biomaterial mit geringem Raumgewicht, wie beispielsweise Strohhäcksel, zufolge dessen Eigengewicht und des damit auftretenden Seitendruckes der Sackwandungen ausreichend elastisch ist, zum anderen aber auch mechanisch widerstandsfähig genug gegen härtere Materialien, wie beispielsweise Holzsplitter oder dergleichen, ist. Vorteilhaft kann hier ein gummiertes festes Leinengewebe oder ein entsprechendes Schichtmaterial aus glasfaserverstärktem oder anderweitig bewährtem Kunststoff

- 9 -

sein.

Im oberen stirnseitigen Bereich ist auf der einen Seite des Silosackes 100 ein Einfüllstutzen 119 vorgesehen, der durch eine Verschlußklappe 115 den luftdichten Abschluß des Silosackes 100 sicherstellt, und durch den das organische Rohmaterial eingebracht wird. Diametral gegenüberliegend ist im unteren Bereich der anderen Stirnseite des Silosackes 100 eine Öffnung für eine sich durch die gesamte Länge des Silosackes 100 in der dargestellten Weise erstreckende Förderschnecke 116 eingebracht, mittels welcher das im unteren Bereich des Silosackes ausreichend verdichtete Material problemlos ausgetragen werden kann. Die Förderschnecke 116 wird mittels der Schneckenwelle 117 über einen Motor 118 angetrieben, der im kontinuierlichen oder diskontinuierlichen Betrieb arbeiten kann, wobei eine rückgekoppelte Steuerung R (s.Fig.1) über ein Deckelsieb im Pyrolysereaktor 200, wie nachfolgend noch näher beschrieben wird, möglich ist.

Die Formgebung des Sackmantels 111 richtet sich jeweils nach der Gleichgewichtsbedingung zwischen Gegengewicht 114 und dem Eigengewicht der innerhalb des Sackmantels 111 befindlichen organischen Rohmaterialien.

- 9 -

Der Sackmantel 111 kann in Abwandlung des dargestellten Ausführungsbeispiels nach Fig. 2 auch ein doppelwandiger Mantel sein, wobei in den Zwischenraum zwischen den beiden Sackumhüllungen zusätzlich Druckluft eingegeben werden kann, um eine weitere Verdichtung des im Silosack 100 befindlichen Biomaterials falls gewünscht vornehmen zu können. Durch die sich selbst regulierende Formgebung des Silosackes 100 kann keine Luft durch den Einführungsstutzen 119 über die Förderschnecke 116 aus dem Silosack ausgetragen werden, wobei die Austragung über die Förderschnecke 116 lastspezifisch erfolgt.

Die Realisierung eines Silos für Biomaterialien, insbesondere solchen von geringem Raumgewicht, ist durch die vorbeschriebene Sackanordnung besonders wirtschaftlich und problemlos, da sowohl Materialbrücken als auch örtliche Verklumpungen oder dergleichen Inhomogenitäten des gespeicherten Biomaterials durch die sich selbst regulierende lastspezifische Dichte vermieden werden.

In Fig. 3 ist der Schwel- und Pyrolysereaktor im einzelnen näher dargestellt. Das über die Förderschnecke 116 aus dem Silosack 100 ausgetragene Biomaterial gelangt über den Schneckenförderer 213, der die Verlängerung der Förderschnecke 116 darstellt, im unteren Bereich in ein senkrechtes zentrisch angeordnetes Rohr 214, von dem es oberhalb eines pyramidenstumpfartigen Drehrostes 225 ausgetragen wird.

Der Schwel- und Pyrolysereaktor 200 setzt sich im wesentlichen aus zwei Behältern, nämlich dem Innenbehälter 212 mit dem genannten Drehrost 225 und dem als Zuführungsschacht dienenden senkrechten Rohr 214 und einem Außenbehälter 211, zusammen. Für den Innenbehälter 212 ist eine übereinandergeordnete doppelte Luftzuführung 215 vorgesehen. Eine Unterdrucksteuerung regelt bei höherer Materialabnahme über den Schneckenförderer 213 die Zufuhr zusätzlicher Luft im oberen Kanalbereich. Wie aus Fig. 3 ersichtlich, erfolgt die Luftzuführung von den dargestellten Rohrstutzen ausgehend über zwei übereinanderliegende Ringräume, was in der Darstellung durch die mit unterstrichener Linienführung angedeuteten Kreise gezeigt werden soll. Infolge dieser Luftzuführung ist die Ascheaustragung über den kegelstumpfförmigen Drehrost 225 von dieser vollständig getrennt, so daß hierdurch ein intermittierender Betrieb oder sonstige Störungen von vornherein ausgeschlossen sind und insbesondere auch die Schlackebildung nahezu vollständig vermieden wird.

- 12 -

Das Drehrost 225 wird im Ausführungsbeispiel mittels eines Motors 216 angetrieben. Es ist jedoch auch ein anderer Antrieb, beispielsweise über eine manuell betätigbare Kurbel oder dergleichen möglich. Der Ascheaustrag wird durch die Schräglage des Drehrostes 225 gegenüber der Strömungsrichtung der zugeführten Frischluft erheblich unterstützt. Die durch den Drehrost 225 nach unten fallende Asche wird über die Ascheentnahme 217 abgeführt, was sich insbesondere bei solchen Biomaterialien mit hohem Ascheanteil, wie zum Beispiel Stroh, für den Betrieb der Vorrichtung als äußerst vorteilhaft erweist.

Der im vorliegenden Ausführungsbeispiel als senkrechtes Rohr 214 ausgebildete Zuführungsschacht für das über den Schneckenförderer 213 zugeführte Biomaterial endet oberhalb des Drehrostes 225 im Innenbehälter 212 des Reaktors oberhalb der Brennzone. Die vertikale Führung des Biomaterials, also das Hochdrücken desselben gegen den vorhandenen Materialdruck im Innenbehälter, wird dadurch erreicht, daß entweder die Förderschnecke 213 unterhalb des Zuführungsschachtes 214 geteilt ist, wobei die beiden Hälften gegenläufig in Drehung versetzt werden, oder daß der Schneckenförderer unterhalb des Zuführungsschachtes so ausgebildet ist, daß er seine Windungsrichtung ändert, also beispielsweise von einer Links-

- 13 -

windung in eine Rechtswindung übergeht oder umgekehrt. Schließlich ist es auch denkbar, dem Zuführungsschacht mit einer geeigneten Bogenkrümmung in den Schneckenschacht übergehen zu lassen, so daß hierdurch die dann unterhalb des Zuführungsschachtes endende Förderschnecke das von ihr geförderte Biomaterial automatisch in das senkrechte Rohr hinein und in diesem nach oben drückt.

Der Zuführungsschacht 214 kann an den Seiten unterhalb des Rostes perforiert ausgeführt sein. Durch diese Lochungen können dann schon im unteren Bereich Pyrolysegase mit einem relativ hohen Wasseranteil entweichen, die durch das Drehrost in die Brennzone gelangen und die Brenntemperatur absenken. Hierdurch kann die Schlackebildung bei einer gleichzeitigen Erhöhung des Vergasungswirkungsgrades zusätzlich weiter verhindert werden. Die seitlichen Perforationen können durch einen Blechring höhenvariabel gehalten werden und hierdurch die Brenntemperatur geregelt werden.

Der beispielsweise als Schwelvergaser arbeitende Reaktor läßt sich so einstellen, daß das entstehende Gas von homogener Zusammensetzung ist, wobei auch lastspezifische Nachteile für Inhomogenitäten in der Gaszusammensetzung

- 14 -

vermeidbar sind. Bei reinem Gasbetrieb wird das Biomaterial solange in den Reaktor eingebracht, bis der Innenbehälter 212 gefüllt ist, wobei das Material dann an einem oberen höhenverschiebbaren Siebboden 219 anstößt und diesen anhebt. Über einen Hebelmechanismus oder dergleichen läßt sich unter Einschaltung einer Regeleinrichtung 220 der den Schneckenförderer 213 antreibende Motor rückgekoppelt steuern, also beispielsweise bei Erreichen eines bestimmten Füllhöhenstandes abstellen.

Wenn der Reaktor 200 im Mischbetrieb für die Erzeugung sowohl von Gas als auch Biokohle arbeitet, kann die Steuerung über den Siebboden 219 abgeschaltet werden und hierfür eine Regelung über ein Thermoelement 218 erfolgen, das den Motor des Schneckenförderers 213 so regelt, daß im oberen Reaktorteil, also an der Stelle des Thermoelementes 218 stets eine konstante Temperatur gegeben ist.

Der der Zufuhr des Biomaterials auf diese Weise proportionale Gasanfall wird über den Gasauslaß 221 einer nachfolgend noch näher zu beschreibenden fraktionierten Druckkondensation unterworfen. Die anfallende Biokohle wird aus dem Kohleauslaß 222 ausgetragen.

- 14 -

Dadurch, daß das in den Innenbehälter 212 eingebrachte Biomaterial schon innerhalb des senkrechten Rohres 214 stark vorerhitzt wird und im Reaktor selbst mit hoher Wärme beaufschlagt wird, ist das Material im oberen Reaktorbereich bereits weitgehend verkohlt. An dem heißen Material, das durch die heißen Generatorgase durchströmt wird, spalten sich die meisten entstehenden Teerfraktionen bereits in leichtere Fraktionen auf, so daß nur noch ein sehr geringer Teeranteil in den Kondensator gelangt. Durch die mittige Einführung des Biomaterials oberhalb der Brennzone kann die Feuchtigkeit vorteilhaft entweichen, ohne daß innerhalb der Brennzone durch diese eine Abkühlung erfolgt, was wiederum zu einer weitgehend homogenisierten kleinstückigen Biokohle, die am Kohleauslaß 222 entnehmbar ist, führt.

Der Raum zwischen dem Innenbehälter 212 und dem Außenbehälter 211 ist auch bei reinem Generatorgasbetrieb mit kleinstückiger Biokohle gefüllt, die die hochsiedenden Teere zurückhält und deren Aufspaltung durch die Generatorabwärme sehr vorteilhaft fördert.

Aus dem Vorstehenden wird deutlich, daß der Reaktor 200 in vorteilhafter Weise sowohl als Generatorgaserzeuger und zur Pyrolyse als auch in Kombination mit der

- 15 -

Generatorgaserzeugung eingesetzt werden kann.

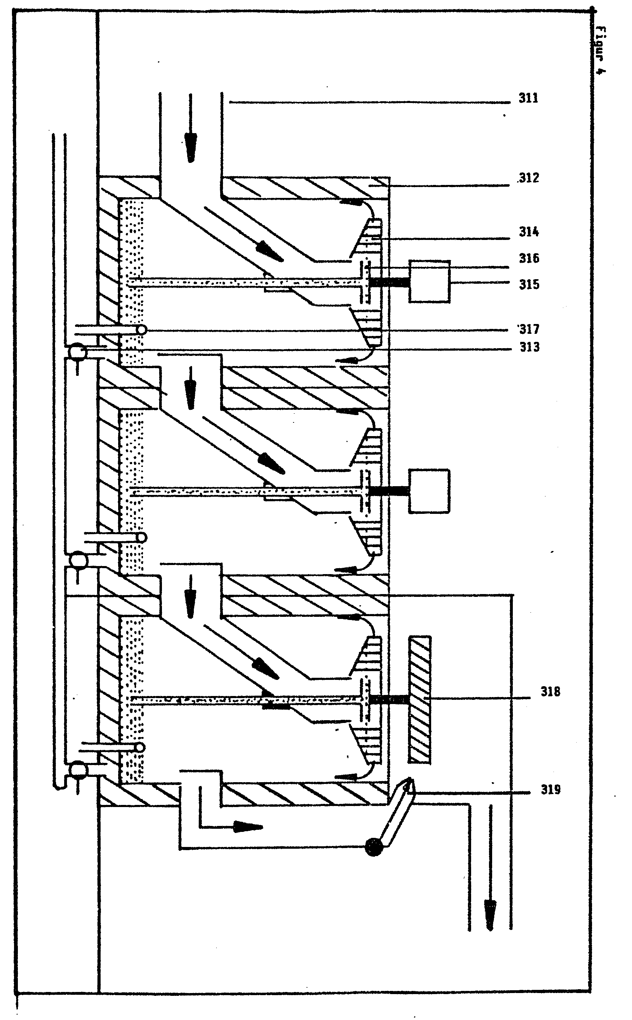

Das den Reaktor 200 verlassende Gas wird einer Druckkondensatoreinrichtung zugeführt, die sich als Batterie einer Mehrzahl von untereinander gleichen Batterie-einheiten darstellt, wodurch eine beliebige Feinfraktionierung des anfallenden Kondensates möglich wird. Die fraktionierte Druckkondensatoreinrichtung 300 wäscht die kondensierbaren Bestandteile des Gases unter Druck aus, wobei bei vorgebbaren Temperaturen das Kondensat in besonderer Weise in einen Radialverdichter eingespritzt wird und sich durch die aus Fig. 4 ersichtliche Reihenanordnung der Druck von Batterieeinheit zu Batterieeinheit aufbaut. Durch die Anordnung ergibt sich, daß der bei niedrigen Temperaturen siedende Kondensatanteil in der Batterieeinheit mit dem höchsten Druck ausgewaschen wird, wobei eine Expansionsturbine die letzte Gebläse-Wascheinrichtung antreibt.

Im einzelnen ist aus Fig. 4,in dem als Ausführungsbeispiel nur drei Batterieeinheiten hintereinander geschaltet sind, dargestellt, daß jede Batterieeinheit sich durch einen Behälter kennzeichnet, der mit einem Kühlmantel 312 versehen ist, durch den im unteren Bereich auf der einen Seite die Gaszuführung 311 vorgesehen ist.

- 16 -

Im Kopfteil treibt ein Motor 315 eine Radialpumpe 316 an, die die Kondensatflüssigkeit gegen einen Radialverdichter 314 gewissermaßen einen Flüssigkeitsschirm bildend schleudert.

Die Kühlflüssigkeit für den Kühlmantel 312 wird durch ein Regelventil 313 auf einer für die jeweilige Kondensatfraktion optimal einstellbaren konstanten Temperatur gehalten. Die Radialpumpe 316 saugt das Kondensat durch die nicht näher bezeichnete dargestellte Hohlachse aus dem unteren Bereich jeder Batterieeinheit an, woraufhin es im oberen Bereich radial auf die Leitbleche des Radialverdichters aufprallt, so daß die vorhandenen Gase den genannten Flüssigkeitsschirm durchströmen müssen, wobei infolge der Zentrifugalwirkung das Auswaschen vor allem im Bereich höchster Verdichtung vorgenommen wird.

Die jeweilige Kondensatfraktion wird über ein Schwimmerventil 317 jeder Batterieeinheit entnommen, um dann einem Zentrifugalverdampfer 400 zur Aufbereitung zugeführt zu werden. Wie vorstehend erwähnt, sind die Batterieeinheiten der Druckkondensationsvorrichtung 300 untereinander gleich aufgebaut, wobei die letzte Einheit sich von den vorhergehenden jedoch insofern unterscheidet, als

- 17 -

diese durch eine Expansionsturbine 318 angetrieben wird, die über ein Drosselventil 319 bei entsprechendem Anströmwinkel in Drehung versetzt wird. Auf diese Weise läßt sich mittels des Drosselventils 319 der Druck innerhalb der Vorrichtung auf einfache Weise regeln. An jeder Kondensatorstufe, also Batterieeinheit, erfolgt eine Kühlung, so daß der gesamte Energieaufwand zur Verdichtung minimal gehalten werden kann. Der stufenweise Druckaufbau von Batterieeinheit zu Batterieeinheit sichert, daß die relativ hoch siedenden Kondensationsanteile bei relativ niedrigen Temperaturen auskondensiert und die relativ niedrig siedenden Bestandteile bei relativ hohen Drücken auskondensiert werden. Diese fraktionierte Druckkondensation ist grundsätzlich für alle Kondensationsvorgänge anwendbar und ermöglicht den Übergang von einer fraktionierten Destillation zur fraktionierten Kondensation, was insbesondere für die pyrolytische Aufarbeitung organischer Rohmaterialien von erheblicher Bedeutung ist.

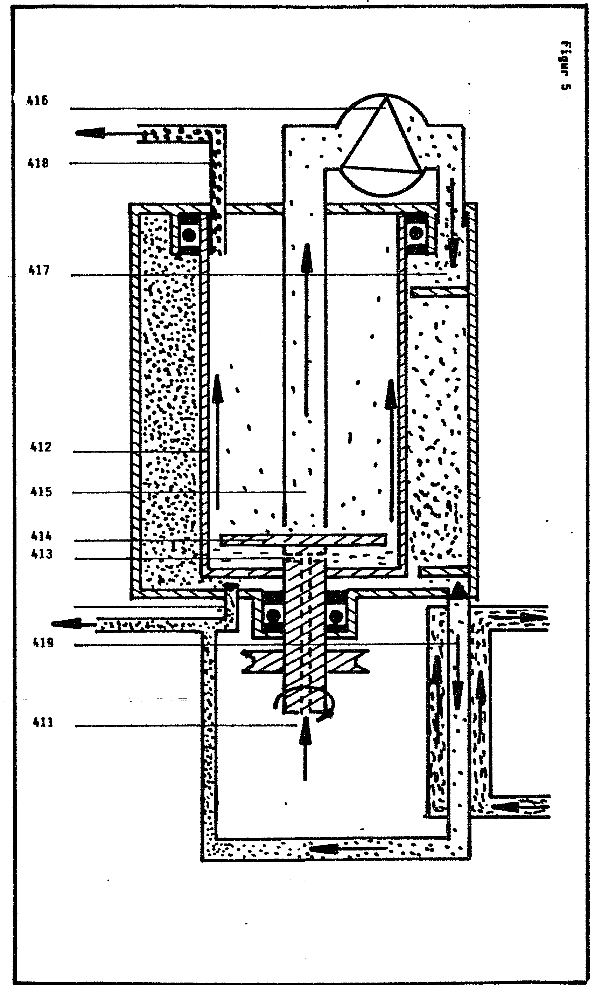

Die vorstehend genannte Zentrifugalverdampfung wird mittels des Zentrifugalverdampfers 400 (s.Fig.1) durchgeführt, der im einzelnen in Fig. 5 im Schnitt dargestellt ist. Der Zentrifugalverdampfer 400 destilliert kontinuierlich aus den anfallenden Ölfraktionen die Leichtöle und Mittelöle aus, während die schwereren Öle wieder in die

— 1% —

Zuführungsschnecke des Reaktors 200 zurückgeführt werden. Das Kondensat der ersten Batterieeinheit der Druckkondensationseinrichtung 300 wird, wie aus Fig. 5 im Zusammenhang mit Fig. 1 zu ersehen ist, über eine Axialbohrung einer Achse 411 in den Innenraum des Zentrifugalverdampfers eingepumpt, um im Bereich des Kondensatauslasses 413 und die dort vorgegebene Querbohrung durch die Achse 411 radial an den als Verdampferwandung ausgebildeten Innenmantel 412 des Zentrifugalverdampfers geschleudert zu werden. Um diesen Vorgang möglichst im unteren Bereich des Innenmantels 412 konzentriert zu halten, ist eine Tellerscheibe 414 vorgesehen, mittels der verhindert wird, daß das Kondensat beim Einspritzen bereits in den oberen Bereich des Innenmantels 412 gesaugt wird. Ein überhitztes Einführen des Kondensats beschleunigt den Destillationsvorgang. Im Abstand oberhalb der Tellerscheibe 414 endet zentrisch zum Innenmantel 412 ein Dampfabsaugrohr 415, über das die Dampfphase abgesaugt wird, um einem Verdichter 416 zugeführt zu werden, woraufhin der Verdichtete Dampf in der dargestellten Form in einen Ring- raum 417 der Ummantelung des Zentrifugalverdampfers 400 einfließt und dort unter Druck auskondensiert.

- 1 -

Die hierdurch anfallende Kondensationswärme wird über den Innenmantel 412 wieder in den Innenraum übertragen. Eine hohe Drehzahl des über die Achse 411 angetriebenen Zentrifugalverdampfers stellt sicher, daß das Kondensat in einem sehr fein verteilten Sprühregen ständig nach oben gewirbelt wird, was zu einer sehr intensiven Dampfwäsche führt, wobei die am Außenmantel des Zentrifugalverdampfers anfallende dünne Flüssigkeitsschicht ständig abgerissen wird, was die Wärmeübertragung auf den Verdampfer weiter vorteilhaft beeinflußt. Über den Kondensationsauslaß 418 wird das Kondensat dem Zentrifugalverdampfer entnommen.

Die Destillation der im Ringraum 417 anfallenden Fraktion erfolgt bei Unterdruck mittels eines Heizmediums nach dem Prinzip des Wärmetauschers über einen Teil der Rohrleitung 419, wobei bereits geringe Erwärmung genügt, so daß auch sehr empfindliche Fraktionen destillierbar sind. Dadurch, daß die schwereren Fraktionen in den Reaktor zurückgeführt werden und dort erneut aufgespalten werden, ist es nur erforderlich, einen Teil der Leicht- und Mittelöle abzudestillieren, da in den nachgeschalteten Durchläufen die Destillation erneut ausführbar ist.

Der in Fig. 5 dargestellte Zentrifugalverdampfer ist außer für das hier beschriebene Anwendungsgebiet auch anderweitig einsetzbar, so beispielsweise für die Destillation von Salzwasser zur Trinkwassergewinnung.

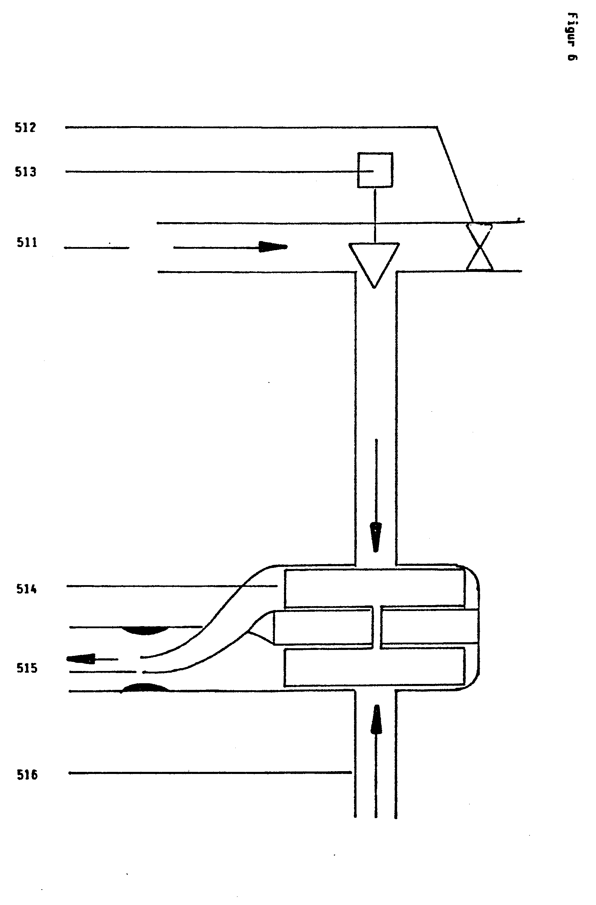

In Fig. 6 ist schließlich noch eine Gas-Luft-Mischeinrichtung skizziert dargestellt, die in der ersten Kondensationsstufe unter Ausnutzung des vorhandenen Gasdruckes durch einen Gasdruckturbolader das Verbrennungsgas bzw. Pyrolysegas vorverdichten kann und annähernd auf einen Druck bringen kann, der in der zweiten Batterieeinheit vorherrscht, wobei in der zweiten Batterieeinheit oder Druckkondensationsstufe mit dieser Vorrichtung in einem Gasstrahlrohr eine Mischung des vorliegenden Gases mit Luft dosiert durchführbar ist, wodurch insbesondere Restdifferenzen im Fördervolumen des Gases ausgeglichen werden können.

Die Gas-Luft-Mischeinrichtung arbeitet mit einem Vordruck des Gases, dessen Fördervolumen durch die Verdichter im Kondensator geregelt wird. Das Gas tritt über einen Einlaß 511 in die Mischeinrichtung ein. Zu Beginn des Prozesses oder bei einem Ausfall des Motors wird das Gas durch das Ventil 512 abgelassen. Während des Motorbetriebes wird das Gas durch ein Magnetventil 513 in die Mischeinrichtung geleitet. Das Magnetventil dient zugleich als Sicherheitseinrichtung . Es schließt sich, wenn der Motor unter eine gewisse Drehzahl fällt.

Das Ansaugen der Luft über eine Ansaugleitung 516, deren Vorverdichtung und Druckangleichung an den Gasdruck erfolgt durch einen Gasdruck-Turbolader 514, der auf der Gasdruck-und der Luftansaugseite je eine kleine Turbine hat, die starr miteinander gekoppelt sind. Durch den expandierten Gasdruck wird die Luft vorverdichtet. Gasdruck und Luftdruck werden auf diese Weise in Abhängigkeit vom Fördervolumen des Gases aneinander angepaßt. Die Mischung von Gas und Luft erfolgt dann in einem Gasstrahlrohr, wo auch ein restlicher Überdruck des Gases zum Ansaugen der Luft genutzt wird. Die exakte Regulierung des Gas-Luft-Verhältnisses kann durch eine zusätzliche Drossel erfolgen.

ANSPRÜCHE

1. Verfahren zur Speicherung sowie Gewinnung von Bioenergie durch kontinuierliche und/oder diskontinuierliche Weiterverarbeitung anfallender organischer Rohstoffe, beispielsweise pflanzlicher Abfälle aller Art mittels Pyrolyse und Kondensation des durch Vergasung anfallenden Fraktionsgemisches, dadurch gekennzeichnet , daß die organischen Rohstoffe aus einem luftdichten Sacksilo lastspezifisch in einen Schwel- bzw. Pyrolysereaktor eingebracht werden und daß das Reaktorgas einer fraktionierten Druckkondensation unterworfen wird, wobei das anfallende Kondensat wahlweise einer Zentrifugalverdampfung unterworfen wird.

2. Vorrichtung zur Durchführung des Verfahrens nach Anspruch 1, dadurch gekennzeichnet, daß das Sacksilo (100) ein über ein Gegengewicht (114) an einer höhenverstellbar gehaltenen Sackaufhängung (112) befestigter elastischer Sackmantel (111) ist.

- 23-

3. Vorrichtung nach Anspruch 2, dadurch gekennzeichnet, daß das organische Rohmaterial entlang einer Stirnseite des Sacksilos in dessen oberen Bereich eingeführt wird und im unteren Bereich über eine sich über die Länge des Sackmantels (111) erstreckende Förderschnecke (116) ausbringbar ist.

4. Vorrichtung zur Durchführung des Verfahrens nach Anspruch 1, dadurch gekennzeichnet, daß der Schwel- bzw. Pyrolysereaktor (200) von unten über einen zentrisch innerhalb eines inneren Behälters (212) angeordneten Zuführungsschacht (214) mit dem organischen Rohstoff gespeist wird, daß eine Doppelluftzufuhr (215) vorgesehen ist und daß der von einem Außenbehälter (211) umschlossene Innenbehälter (212) in seinem oberen Bereich von einem höhenverstellbaren Siebboden (219) verschlossen ist.

5. Vorrichtung nach Anspruch 4, dadurch gekennzeichnet, daß um den Zuführschacht (214) schräg nach außen abfallend ein Drehrost (225) angeordnet ist.

6. Vorrichtung zur Durchführung des Verfahrens nach Anspruch 1, dadurch gekennzeichnet, daß der Kondensator eine aus einer Mehrzahl von vorzugsweise

- 24 -

untereinander gleichartigen Einheiten bestehende fraktionierte Druckkondensationsvorrichtung (300) ist, von der jede Einheit eine das Kondensat ansaugende Radialpumpe (316) und einen Radialverdichter (314) aufweist, wobei die letzte der in Reihe hintereinander geschalteten Einheiten mittels einer Expansionsturbine (318) antreibbar ist.

7. Vorrichtung zur Durchführung des Verfahrens nach Anspruch 1, dadurch gekennzeichnet, daß das anfallende Kondensat einem Zentrifugalverdampfer (400) über dessen hohl ausgebildete Antriebsachse (411) zuführbar ist, daß das Kondensat radial innerhalb des Zentrifugalverdampfers ausgetragen unterhalb einer Tellerscheibe (414) gegen den Innenmantel (412) des Zentrifugalverdampfers geschleudert ist und daß die über ein Dampfabsaugrohr (415) abgesaugte Phase über einen Verdichter (416) einem den Innenmantel (412) umgreifenden Ringraum (417) zuführbar ist.

8. Vorrichtung zur Durchführung des Verfahrens nach Anspruch 1, dadurch gekennzeichnet, daß eine in der ersten Fraktionsstufe unter Ausnutzung des Gasdruckes durch einen Gasdruckturbolader die Ver-

- 25 -

brennungsluft vorverdichtende Gas-Luft-Mischvorrichtung vorgesehen ist, mittels der in der nachfolgenden Kondensationsstufe in einem Gasstrahlrohr die Mischung des Gases mit Luft durchführbar ist.

Figur 1

Figur 2

Figur 3

0096140

Figur 4

311

312

314

316

315

317

313

318

319

Figur 5

416
418
417
412
415
414
413
419
411

Figur 6

516 515 514 511 513 512

6/6

0096140

0096140

Europäisches
Patentamt

EUROPÄISCHER RECHERCHENBERICHT

Nummer der Anmeldung

EP 82 73 0080

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | --- <br> DE-A-3 030 593 (MICHEL-KIM) <br><br> * Ansprüche 1-6,16,17,19,20,26; Figuren 3-6,8,10,16 * | 1,4,6-8 | C 10 B 53/00 <br> C 10 B 1/04 |
| A | --- <br> DE-A-2 520 271 (VOSWERKE) <br><br> * Ansprüche 1,4,9; Figuren * | | |
| A | --- <br> WO-A-8 101 010 (B & W ALPHA DIESEL et al.) <br> * Figuren * | | |
| | ----- | | |

**RECHERCHIERTE SACHGEBIETE (Int. Cl. 3)**

C 10 B
B 65 D

Der vorliegende Recherchenbericht wurde für alle Patentansprüche erstellt.

| Recherchenort <br> DEN HAAG | Abschlußdatum der Recherche <br> 14-02-1983 | Prüfer <br> MEERTENS J. |
|---|---|---|